(19) **Europäisches Patentamt**

**European Patent Office**

**Office européen des brevets**

(11) Veröffentlichungsnummer: **0 299 153 B1**

(12) # EUROPÄISCHE PATENTSCHRIFT

(45) Veröffentlichungstag der Patentschrift: **08.07.92**

(21) Anmeldenummer: **88106250.9**

(22) Anmeldetag: **20.04.88**

Die Akte enthält technische Angaben, die nach dem Eingang der Anmeldung eingereicht wurden und die nicht in dieser Patentschrift enthalten sind.

(51) Int. Cl.⁵: **A21D 8/06**, A21D 10/02

(54) **Verfahren zur Herstellung eines zum Fertigbacken beim Verbraucher bestimmten Brotlaibs.**

(30) Priorität: **14.07.87 DE 3723184**

(43) Veröffentlichungstag der Anmeldung:
**18.01.89 Patentblatt 89/03**

(45) Bekanntmachung des Hinweises auf die Patenterteilung:
**08.07.92 Patentblatt 92/28**

(84) Benannte Vertragsstaaten:
**AT BE CH DE ES FR GB GR IT LI LU NL SE**

(56) Entgegenhaltungen:
**AT-A- 164 249**
**CH-A- 221 298**
**DE-A- 2 246 214**
**FR-A- 2 305 349**

(73) Patentinhaber: **Leupoldt, Franz**
**Adalbert Stifter Strasse 2**
**W-8687 Weissenstadt(DE)**

(72) Erfinder: **Leupoldt, Heinrich**
**Goethestrasse 23**
**W-8687 Weissenstadt(DE)**
Erfinder: **Leupoldt, Franz**
**Adalbert-Stifter-Strasse 2**
**W-8687 Weissenstadt(DE)**

(74) Vertreter: **Zahn, Roland, Dipl.-Ing.**
**Im Speitel 102**
**W-7500 Karlsruhe 41(DE)**

## Beschreibung

Die vorliegende Erfindung bezieht sich auf ein Verfahren zur Herstellung eines bei Raumtemperatur viele Wochen haltbaren und zum Fertigbacken beim Verbraucher bestimmten Brotlaibs, der in Form eines vorgeformten Teiglings luftdicht, insbesondere in Folie eingepackt niedrigen Temperaturen von vorzugsweise 100° bis 120° C ausgesetzt wird.

Das Backen von Brot und Backwaren allgemein gehört zu den ältesten und traditionsreichsten Handwerksberufen. Dabei werden Backwaren unterschiedlichster Rezepturen und Formen geschaffen und zwar zu einem wesentlichen Teil in handwerklich geführten Bäckereibetrieben. Mehr und mehr entstanden im Laufe der Zeit auch Großbäckereien und Brotfabriken, die Backwaren im industriellen Maßstab und nach industriellen Verfahren fertigen und vertreiben.

In neuerer Zeit ist eine Entwicklung zu beobachten, die das Herstellen von Backwerk wieder näher zum häuslichen Herd bringt. So gibt es bereits Brötchen (oder Semmeln), die als vorgeformte Teiglinge zu kaufen und im häuslichen Herd zu backen sind.

Bekannt ist auch ein vorwiegend beim Kleingebäck angewandtes Vorbackverfahren (BROWN-AND-SERVE-Verfahren), gemäß dem das Gebäck bei sehr niedrigen Temperaturen von beispielsweise 135 bis 150° C in einer langen Vorbackzeit so lange vorgebacken bzw. getrocknet wird, bis es in der Krume genügend fest geworden ist. Der Back-(bzw. Trocknungs-) Vorgang wird vor der Bräunung abgebrochen. Die Gebäckstücke werden dann nach dem Abkühlen in sogenannte Frischhaltepackungen verpackt und gelangen so zum Verkauf und zum Verbraucher; sie sind mehrere Tage haltbar, unter Schutzgas oder im Kühlschrank bis zu vierzehn Tagen. Das Ausbacken erfolgt dann unmittelbar vor dem Verzehr im Haushalt und zwar je nach Art und Größe der Gebäckstücke 7 bis 10 Minuten bei einer Temperatur von etwa 230° C. Dabei ist es dem Verbraucher möglich, sich selbst frische warme Backwaren zuzubereiten und auch die gewünschte Bräunung nach individuellem Geschmack zu regulieren.

Die nach dem "BROWN N'SERVE"-Verfahren hergestellten Backwaren sind nur begrenzt haltbar. Darüberhinaus müssen die vorgebackenen Gebäckstücke nach dem Vorbakken und Abkülen gesondert verpackt werden, was für die Dauer der Abkühlphase einen zusätzlichen Lagerflächenbedarf und Infektionsgefahren bedingt.

Die Liebe und Neigung zum selbstgebackenen Brot ist in jüngster Zeit ebenfalls zu beobachten. Einerseits ist in Backbüchern (für die Hausfrau) eine Reihe von Rezepturen für insbesondere rustikale Brote zu finden; andererseits werden im Rahmen von Dorf- oder auch Altstadtverschönerungen sogar alte Backhäuser instand gesetzt, um den Bürgern die Möglichkeit zu geben, ihr Brot wieder selbst zu backen.

Die Tendenz geht jedenfalls eindeutig in die Richtung, daß auch Brot zunehmend selbst, d.h. am häuslichen Herd hergestellt wird. Dies setzt jedoch voraus, daß auch der Teig für dieses Backwerk selbst hergestellt werden muß.

Bezugnehmend auf die vorgenannten Backbücher ist mit dem Herstellen des Backteigs im häuslichen Bereich jedoch trotzdem der Gang zum Bäkker kaum vermeidbar, da das Herstellen des für das Backen erforderlichen Sauerteigs nicht unproblematisch ist; einerseits ist das Ansetzen des Sauerteigs recht zeitaufwendig und andererseits mißglückt dieses Vorhaben häufig.

Hinzu kommt noch, daß - und dies gilt insbesonders im Hinblick auf Vollkornbrote - auch die einzelnen Zutaten für den Brotteig im allgemeinen frisch gemahlen sein sollten. Dies erfordert jedoch eine eigene entsprechende Mühle.

Es gibt auch bereits ein Verfahren ("Walsroder Verfahren") bei dem Brotteiglinge, die in einem wasserdampf-durchlässigen Folienschlauch eingeschlagen sind und zusammen mit diesem Schlauch fertig gebacken werden. Hierbei ist die Backzeit im häuslichen Bereich jedoch relativ lange, so daß gerade für kurzfristigen Bedarf kein Brot zur Verfügung steht. Die Folie hat dabei nur die Aufgabe, das Brot während des Backprozesses in Form zu halten und ist nicht geeignet, dem Teigling im Rahmen des Handlings beim Lebensmittelhandel die erforderliche Formstabilität zu geben; die Teiglinge sind zu weich, d.h. zu leicht verformbar. Auch ist die dabei verwendete Zellglasfolie aufgrund ihres Zusatzes von Diäthylenglycol nicht sonderlich geeignet und im Hinblick auf ihre Herstellung umweltunfreundlich.

Die der vorliegenden Erfindung zugrunde liegende Aufgabe besteht darin, ein Verfahren zur Herstellung eines Brotlaibs anzugeben, der der Hausfrau das Zubereiten des Teigs, insbesondere auch das Beschaffen und Aufbereiten der Zutaten und Rohstoffe abnimmt und den die Hausfrau in der Art des "BROWN N'SERVE"-Verfahrens kurzfristig und individuell ausbacken kann, der jedoch bei normaler Raumtemperatur über viele Wochen haltbar ist.

Diese Aufgabe wird dadurch gelöst,

daß a) eine vorgegebene Menge einer Brotteigmischung in einen ersten Folienbeutel eingefüllt wird, und zwar derart, daß dieser etwa zur Hälfte gefüllt ist,

daß b) das überstehende offene Ende des ersten Folienbeutels umgeschlagen wird,

daß c) der Brotteig nach dem Umschlagen des offenen Endes des ersten Folienbeutels zu einem Teigling geformt wird,

daß d) der erste Folienbeutel mit dem Teigling in einen zweiten Folienbeutel eingeführt wird, wobei der erste Folienbeutel bezogen auf die Längsachse relativ zum zweiten Folienbeutel gedreht ist und der zweite Folienbeutel eine solche Länge hat, daß er über den eingeführten Teigling übersteht,

daß e) der überstand des zweiten Folienbeutels gefaltet und umgeschlagen wird, und

daß f) der so luftdicht eingepackte Teigling nach Ablauf seiner Gärzeit pasteurisiert, d.h. haltbar gemacht wird, wobei die Hefen, Sauerteigkulturen und eventuell vorhandene Fremdinfektionen abgetötet werden.

Besondere Zuordnungen der Folienbeutel relativ zueinander sind Gegenstand der Ansprüche 2 und 3. Wenn gemäß Anspruch 4 eine verschweißbare Folie verwendet wird, kann diese Folie so gefaltet werden, daß sie sich im Verlaufe des Backvorgangs selbsttätig versiegelt.

Außer den vorstehend bereits gewürdigten Verfahren sind aus der Patentliteratur auch weitere Backverfahren bekannt, gemäß denen in Verbindung mit Brotteiglingen bereits Kunststoff-Umhüllungen verwendet wurden. In der AT-A 164 249 ist ein Backverfahren beschrieben, gemäß dem ein Teigling in eine Kunststoff-Folie eingefüllt und so durchgebacken wird. Die CH-A 221 298 beschreibt ein Verfahren zum Herstellen von Brot, gemäß dem der Teigling mit einer luftdichten Kunststoff-Umhüllung versehen und bei etwa 100° C gebacken wird; die dabei verwendete Kunststoff-Umhüllung ist bei diesem Verfahren luftdicht verklebt.

Diese beiden vorgenannten Schriften offenbaren jeweils Verfahren zur Herstellung von Brot als Fertigprodukt. Gleiches gilt sinngemäß auch für das in der FR-A 2 305 349 beschriebene Verfahren zur Herstellung von abgepackten, gebackenen Lebensmitteln. Hierbei wird der Teigling zunächst in offener Folie durchgebacken; die Folie wird nach dem Backvorgang versiegelt und die so verpackte Ware wird gegebenenfalls noch in eine zweite Kunststoffhülle gesteckt.

Keine der hier genannten Vorveröffentlichungen offenbart einen zum Fertigbacken beim Verbraucher geeigneten Brot-Teigling,

- der ohne Kühlung viele Wochen haltbar bleibt, und
- der erst durch das Fertigbacken im Haushalt die brottypischen Eigenschaften Kruste und Geschmack erhält.

Die Erfindung wird im folgenden anhand einer die vorbeschriebene Doppel-Folien-Verpackung darstellenden Zeichnung, sowie anhand eines Herstellungsprozesses näher beschrieben.

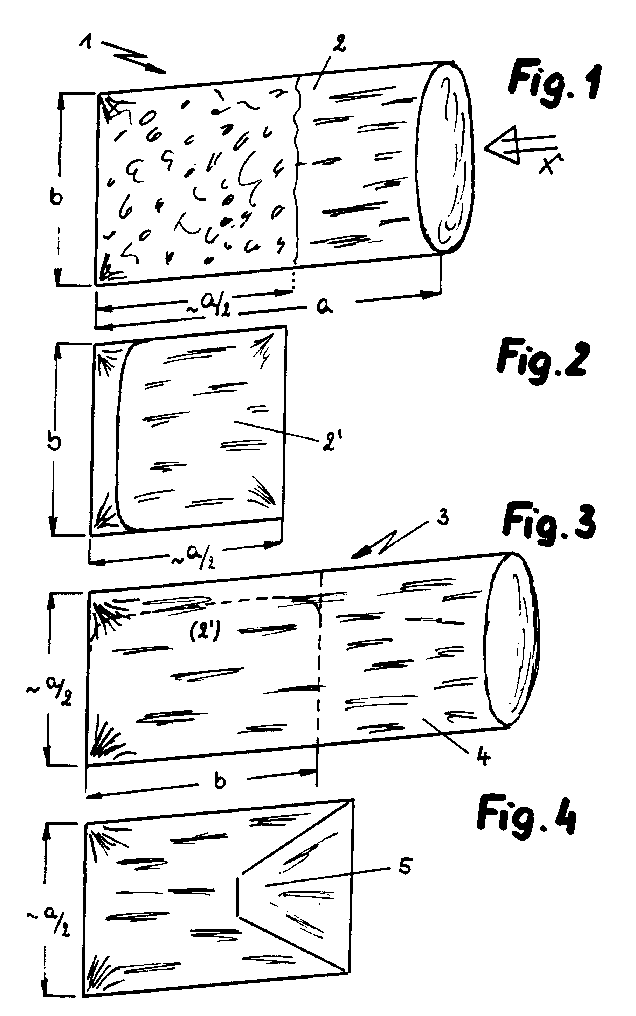

In der Zeichnung sind nacheinander (Fig. 1 bis Fig. 4) vier aufeinanderfolgende (Herstellungs-) Stadien der Doppel-Folien-Verpackung dargestellt.

Fig. 1 zeigt einen ersten Folienbeutel 1 der Länge a und der Breite b, der etwa bis zur Hälfte (≈ a/2) mit Brotteig befüllt wird (Pfeil X).

Dieser Brotteig ist in an sich bekannter Art und Weise zubereitet, d.h. die Rohstoffe und Zutaten werden der gewünschten Brotsorte entsprechend innig miteinander vermischt. Der Teig ist also kein willkürliches Gemisch, sondern stets eine rezeptgenau abgewogene Mischung aus dem Grundstoff Mehl, der Teigflüssigkeit, dem Lockerungsmittel und den individuell gewünschten Teigzutaten.

Hat der Teig die gewünschten Eigenschaften in Bezug auf Bindung, Stand, Formbarkeit und Lockerungsfähigkeit, so wird er der gewünschten Brotform entsprechend ausgeformt. Dazu werden entweder abgeteilte und abgewogene Teilstücke des Teigs einfach vor- und rundgewirkt, und z.B. als runde Teigballen in Folie (oder auch andere geeignete und zugelassene Verpackungsstoffe) eingepackt, oder der Brotteig wird entsprechend der Darstellung nach Fig. 1 in den ersten Folienbeutel 1 eingefüllt.

Fig. 2 zeigt den etwa zur Hälfte gefüllten ersten Folienbeutel 1 , bei dem das überstehende Ende 2 (vgl. Fig. 1) so umgeschlagen ist - vgl. 2'-, daß der eingefüllte Brotteig nahezu dicht eingefüllt ist. Diese Form mit den Abmessungen der Länge von etwa a/2 und der Breite b wird nunmehr plattgedrückt, so daß hierbei ein rechteckiger länglicher Teigling (Langform) entsteht.

Fig. 3 zeigt den vom ersten Folienbeutel 1 eingehüllten Teigling, nachdem er in einen zweiten Folienbeutel 3 eingeführt ist. Dabei ist der erste Folienbeutel 1 quer zur Längsachse des zweiten Folienbeutels 3 eingeführt; es ist jedoch auch denkbar, den ersten Folienbeutel 1 so in den zweiten Folienbeutel 3 einzuführern, daß die geschlossene Seite, d.h. der Boden des ersten Folienbeutels 1 zur offenen Seite des zweiten Folienbeutels 3 hin liegt.

Der zweite Folienbeutel 3 ist bezüglich seines Durchmessers so gewählt, daß der zur Hälfte gefüllte erste Folienbeutel 1 insbesondere dicht anliegt; die Länge des zweiten Folienbeutels 3 ist so gewählt, daß bei eingeführtem Teigling ein Überstand 4 verbleibt.

Fig. 4 zeigt den gefüllten zweiten Folienbeutel 3 bei dem der Überstand 4 - vgl. 3 - gefaltet (Faltung 5) und seinerseits außen umgeschlagen ist.

Der so eingepackte und vorgeformte Teigling (Wirkling) kann nun bei einer Temperatur von etwa 28 - 32° Celsius gären, damit er die erforderliche Lockerung erhält (Stückgare).

Nach der Gärzeit wird sodann der Teigling bei niedrigen Temperaturen so lange gebacken, bis die gesamte Brotkrume bis zum Kern durchgebacken ist. Die dabei gewählte Temperatur beträgt vorzugsweise 100° bis 120° C. Dadurch entsteht ein bis zum Kern durchgebackener Brotlaib ohne Kruste, wobei das Innere der Brotkrume in etwa noch nahezu den gleichen Feuchtigkeitsgehalt aufweist wie der Teig, aus dem der Brotlaib geformt war. Der so entstandene Brotlaib ist somit gleichzeitig pasteurisiert.

Die weitere und bestimmungsgemäße Verwendung im Haushalt bzw. das Aufbacken des vorgebackenen Brotlaibs - nach seiner Lagerzeit von bis zu mehreren Wochen - geschieht dann in der Art, daß die Folie des vorgebackenen Brotlaibs aufgeschnitten und entfernt wird. Der Brotlaib wird dann mit Wasser oder Fett eingerieben und - je nach persönlichem Geschmack - bei etwa 200° Celsius (fertig-) gebacken. Dabei entsteht dann die Kruste. Dieser Nachback-Vorgang wird dann abgebrochen, wenn die Kruste die gewünschte Färbung und Dikke erreicht hat.

Bezüglich des häuslichen Fertig-Backens ist es durchaus denkbar und sinnvoll, den in Folie eingepackten Teigling bei etwa 100° Celsius oder im Mikrowellenherd auf schwacher Stufe vorzuwärmen. Anschließend erst wird dann die Folie entfernt und der Brotlaib bei der genannten Temperatur von etwa 200° Celsius fertig gebacken. Diese Vorgehensweise hat den Vorteil, daß die beim Fertig-Backen aufgebrachte Wärmeenergie nicht mehr so rasch zum Kern des Teiglings abfließt. Auch reduziert sich die Backzeit ohne Folie, so daß der Brotlaib insgesamt eine geringere Austrocknung aufweist.

Auch die Erhöhung der Backtemperatur auf 240° bis 250° Celsius beschleunigt den Prozeß der Krustenbildung.

Bezüglich der Verpackung dem Teiglings , d.h. des Folienmaterials, soll noch angemerkt werden, daß bei Verwendung einer geeigneten Folie, insbesondere einer Folie, die bei 100° Celsius zusammenschweißt, diese so gefaltet und gelegt werden kann, daß sie sich während des Backvorgangs selbst verschließt, d.h. versiegelt. Damit erhält man letztlich einen ringsum versiegelten, vorgebackenen Brotlaib, der in dieser Form schließlich in den Verkehr gebracht wird. (Für extrem lange Haltbarkeitsdauer kann dieser versiegelte Brotlaib zusätzlich noch in einen weiteren Beutel luftdicht eingepackt werden).

**Patentansprüche**

**1.** Verfahren zur Herstellung eines zum Fertigbakken beim Verbraucher bestimmten Brotlaibs, der in Form eines vorgeformten Teiglings luftdicht, insbesondere in Folie eingepackt niedrigen Temperaturen von vorzugsweise 100° bis 120° Celsius ausgesetzt wird,
dadurch gekennzeichnet,
daß a) eine vorgegebene Menge einer Brotteigmischung in einen ersten Folienbeutel (1) eingefüllt wird, und zwar derart, daß dieser etwa zur Hälfte gefüllt ist,
daß b) das überstehende offene Ende (2) des ersten Folienbeutels (1) umgeschlagen wird,
daß c) der Brotteig nach dem Umschlagen des offenen Endes (2) des ersten Folienbeutels (1) zu einem Teigling geformt wird,
daß d) der erste Folienbeutel (1) mit dem Teigling in einen zweiten Folienbeutel (3) eingeführt wird, wobei der erste Folienbeutel (1) bezogen auf die Längsachse relativ zum zweiten Folienbeutel (3) gedreht ist und der zweite Folienbeutel (3) eine solche Länge hat, daß er über den eingeführten Teigling übersteht,
daß e) der überstand (4) des zweiten Folienbeutels (3) gefaltet (Faltung (5)) und umgeschlagen wird, und
daß f) der so luftdicht eingepackte Teigling nach Ablauf seiner Gärzeit pasteurisiert, d.h. haltbar gemacht wird, wobei die Hefen, Sauerteigkulturen und eventuell vorhandene Fremdinfektionen abgetötet werden und die Haltbarkeit des, nach diesem Verfahren hergergestellten Brotlaibs bei Zimmertemperatur viele Wochen beträgt.

**2.** Verfahren nach Anspruch 1,
dadurch gekennzeichnet,
daß der erste Folienbeutel (1) dem zweiten Folienbeutel (3) gegenüber um 90° gedreht wird.

**3.** Verfahren nach Anspruch 1,
dadurch gekennzeichnet,
daß der erste Folienbeutel (1) dem zweiten Folienbeutel (3) gegenüber um 180° gedreht wird.

**4.** Verfahren nach Anspruch 1, 2 oder 3,
dadurch gekennzeichnet,
daß bei Verwendung von bei etwa 100° Celsius selbst verschweißender Folie diese so gefaltet wird, daß sie sich während des Backvorgangs selbsttätig versiegelt.

**Claims**

**1.** A method for manufacturing a loaf of bread for the consumer to finish baking at home, which loaf, in the form of a pre-shaped lump of dough, is exposed to temperatures of preferably 100° to 120° Celsius under airtight conditions, in particular packed in foil, characterised in

that a) a predetermined quantity of a bread dough mixture is inserted in a first foil-bag (1), in such a way that the bag is about half full;

that b) the projecting open end (2) of the first foil-bag (1) is turned over;

that c) the dough is shaped like a loaf after the open end (2) of the first foil-bag (1) has been turned over;

that d) the first foil-bag (1) with the unbaked loaf is inserted in a second foil-bag (3), the first bag (1) being twisted in relation to the second bag (3) relative to the longitudinal axis, and the second bag (3) being of sufficient length that it projects over the inserted unbaked loaf;

that e) the excess length (4) of the second foil-bag (3) is folded (fold (5)) and turned over, and

that f) the unbaked loaf airtight-packed in this way, after it has finished fermenting, is pasteurised, i.e. preserved, during which the yeasts, sourdough cultures and any foreign infections which may be present are killed, and the loaf of bread manufactured according to this method will keep for many weeks at room temperature.

2. A method according to Claim 1, characterized in that the first foil-bag (1) is twisted about 90° in relation to the second foil-bag (3).

3. A method according to Claim 1, characterised in that the first foil-bag (1) is twisted about 180° in relation to the second foil-bag (3).

4. A method according to Claim 1, 2 or 3, characterised in that, use being made of foil which is self-welding at about 100° Celsius, the foil is folded in such a way that it seals itself automatically during the baking process.

**Revendications**

1. Procédé de fabrication d'une miche de pain, conçue pour subir la cuisson finale chez le consommateur et présentée sous forme d'une ébauche en pâte, empaquetée de façon étanche à l'air, en particulier sous une feuille, et exposée à des températures basses allant de préférence de 100°C à 120°C, caractérisé en ce

a) qu'une quantité déterminée d'un mélange de pâte à pain est introduit pour remplir un premier sachet en feuille (1), à savoir de façon qu'il soit rempli à moitié,

b) que l'extrémité ouverte susjacente (2) du premier sachet en feuille (1) est rabattue,

c) que la pâte à pain est formée, après le repli de l'extrémité ouverte (2) du premier sachet (1), pour former une ébauche en pâte,

d) que le premier sachet en feuille (1) est introduit, avec l'ébauche en pâte, dans un deuxième sachet en feuille (3), le premier sachet en feuille (1) étant tourné, autour de l'axe longitudinal, par rapport au deuxième sachet en feuille (3) et ce dernier ayant une longueur telle qu'il dépasse au-dessus de l'ébauche en pâte insérée,

e) que le dépassement (4) du deuxième sachet en feuille (3) est plié (pli (5)) et rabattu, et

f) que l'ébauche en pâte ainsi emballée est pasteurisée après écoulement de son temps de fermentation, c'est-à-dire rendu conservable, les cultures de levure, levain et infections éventuelles d'origine étrangère étant détruites et la durée de conservation de la miche de pain fabriquée suivant ce procédé étant de plusieurs semaines à la température ambiante.

2. Procédé selon la revendication 1, caractérisé en ce que le premier sachet en feuille (1) est tourné de 90° par rapport au deuxième sachet en feuille (3).

3. Procédé selon la revendication 1, caractérisé en ce que le premier sachet en feuille (1) est tourné de 180° par rapport au deuxième sachet en feuille (3).

4. Procédé selon la revendication 1, 2 ou 3, caractérisé en ce qu'en cas d'utilisation d'une feuille à autosoudage à une température d'à peu près 100°C, cette feuille est pliée de façon à se sceller automatiquement pendant le processus de cuisson.

Fig.1

Fig.2

Fig.3

Fig.4